Europäisches Patentamt

European Patent Office

Office européen des brevets

(19)

(11) **EP 1 286 293 A1**

(12) # EUROPEAN PATENT APPLICATION

(43) Date of publication:
**26.02.2003 Bulletin 2003/09**

(51) Int Cl.⁷: **G06F 17/60**

(21) Application number: **02078347.8**

(22) Date of filing: **13.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **18.08.2001 GB 0120279**

(71) Applicant: **Rogers, David Geraint
Loughborough, Leicester LE11 3AY (GB)**

(72) Inventor: **Rogers, David Geraint
Loughborough, Leicester LE11 3AY (GB)**

(74) Representative: **Smith, Peter James
Serjeants,
25 The Crescent,
King Street
Leicester LE1 6RX (GB)**

(54) **A method of assessing space utilization**

(57)    A target space utilization of a property is calculated as an average cost per workplace divided by a property income per person. The result indicates whether greater use should be made of the property to justify the proportion of income that is spent on it. The method has particular application to universities and other educational establishments. There is further provided a method of assessing an effective cost per workplace in a property, calculated as the average cost per workplace divided by the actual space utilization. This indicates the subsidy of an inefficient workplace is monetary terms. The method may be embodied in software.

EP 1 286 293 A1

**Description**

## DESCRIPTION

Technical field

The invention relates to methods for assessing the efficiency of space utilization by an enterprise operating in a property and relating that efficiency to a monetary value. It has particular application to the use of teaching space by universities, colleges and other educational establishments.

Background

It is in the interests of all enterprises that they make efficient use of space in the properties that they occupy. Owning and running a building or other property involves costs such as repair and maintenance, lighting, heating and insurance. For a profit-making enterprise, those costs reduce the profit to be made from the activities carried out in the building. For a non-profit-making enterprise, the costs reduce the resources available for other activities and services or require an increase in funding to cover them.

In the past, costs associated with property have tended to be regarded as inevitable overheads and efficiency increases have either been sought in other aspects of the enterprise's activities or in superficial ways such as turning down the heating. There have been some attempts to regulate the efficiency of use of buildings: for example, English colleges of further education are given a guideline of 30% space utilization.

An average level of space utilization is a product of room frequency and workplace occupancy. These terms may be defined as follows:

- Room frequency is the proportion of a specified period of time, such as a 40 hour working week, when a room or other defined space is occupied by at least one person.
- Workplace occupancy is the proportion of the available workplaces occupied when a room or other defined space is in use.
- A workplace is defined as a location of a given area required for one person to work on a defined activity or process.

Space utilization is the room frequency multiplied by workplace occupancy. Generally the figures are average over a specified period of time.

An alternative method of calculating space utilization is based on the following formula:

$$\frac{total\ used\ workplace\ hours\ in\ specified\ time\ period}{available\ workplaces \times specified\ hours}$$

This alternative method does not depend on the calculation of separate room frequency and workplace occupancy rates.

Such a prescribed target space utilization level has a number of limitations:

- In order to enable the comparison of space utilization levels in different institutions it is necessary to define a standard working week and working year and to specify a standard area per workplace for any given activity. Individual institutions or enterprises can reasonably insist that such issues as the definition of the working week or area per student or employee are management issues to be defined by an enterprise or institution in relation to its own distinctive function or chosen method of operation.

- A specified space utilization level does not take into account the financial position of individual institutions and provides no direct link with the monetary cost associated with its operation. It is not possible for accountants or regulatory bodies to assess the performance of individual enterprises or groups of companies, organizations or institutions.

Summary of the invention

The invention provides a method of assessing a target space utilization of a property, comprising: determining a property income per person; determining an average cost per workplace; and calculating the target space utilization using the following formula:

$$target\ space\ utilization = \frac{average\ cost\ per\ workplace}{property\ income\ per\ person}$$

Preferably, the property income per person is determined using the following formula:

$$property\ income\ per\ person = \frac{total\ income}{number\ of\ persons} \times \frac{property\ costs}{total\ costs},$$

in which the number of persons may be an equivalent number of full-time persons. Naturally, the property costs and total costs need not relate to the entire enterprise but may relate to a subdivision of the enterprise by location or by function, provided that both quantities relate to the same such subdivision.

Preferably, the average cost per workplace is determined using the following formula:

$$average\ workplace\ costs = average\ workplace\ area \times \frac{total\ working\ area\ costs}{total\ working\ area}$$

In this formula, the total working area preferably represents the area of income-generating space, i.e. the total area of workplaces. The total working area costs are the property costs associated with the total working area, which may include the costs of ancillary space that does not generate income. The average cost per workplace assumes a space utilization level of 100 %.

The invention also provides a method of assessing an effective cost per workplace in a property, comprising:

determining an actual space utilization in the property;
determining an average cost per workplace; and
calculating the effective cost per workplace using the following formula:

$$effective\ cost\ per\ workplace = \frac{average\ cost\ per\ workplace}{actual\ space\ utilization}$$

The inventive method may also be applied to other public institutions such as hospitals and councils and to businesses of all kinds. It has particular application when the property is an educational establishment, the persons are students and the working areas are teaching areas.

The invention also provides a computer program for carrying out the method and a computer loaded with software for carrying out the method.

The method according to the invention gives the following advantages:

- The monitoring of space utilization becomes an integral part of the accounting system within individual institutions.
- Efficient use of expensive space resources is identified on the basis of the best interests of an institution rather than by reference to an arbitrary figure promoted and policed by an external body.
- Space norms for different types of workplace are not required. Space utilization is defined on the basis of affordable costs. Within justifiable financial limits, individual institutions are free to vary such factors as the size of workplaces, the duration of the working week and the space allocated to different types of accommodation.
- The distinctive aspects of individual institutions such as their financial position, objectives, management procedures, patterns of activity and nature of recruitment can all be taken into account in ways that are not possible using prescribed national efficiency targets.
- The assessment of target space efficiency can be made using data available from the central administration of the institution. From a consultant's point of view, the national guidelines are replaced by base data available from any conventional accounting and estate management system.
- The level of space utilization per workplace over a specified period of time can be calculated in relation to the capital and operating costs of planned property developments.

The drawing

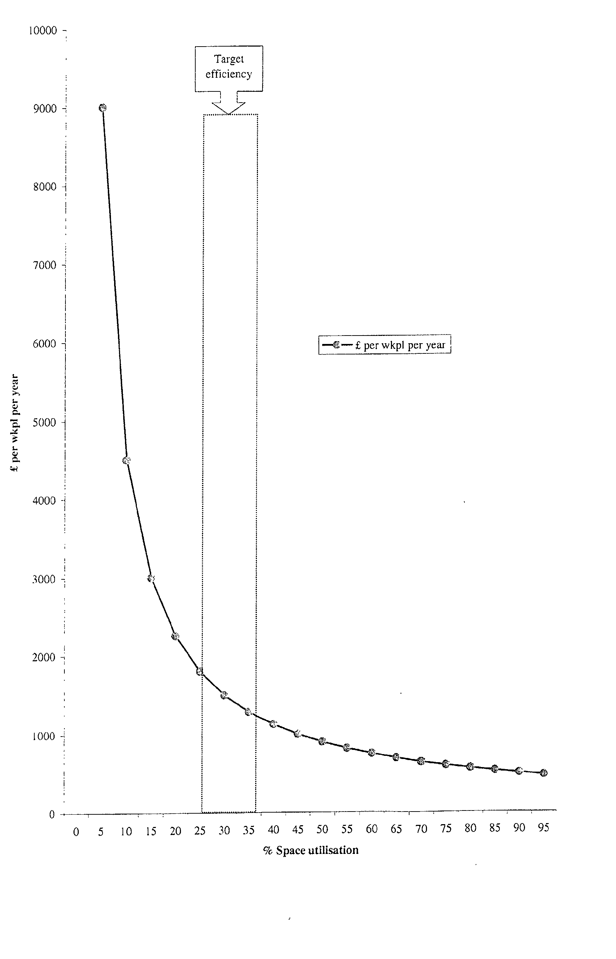

Fig. 1 is a graph illustrating an example of how the effective cost per workplace varies in relation to actual space utilization.

Example of the method according to the invention

The example will illustrate the calculation of a target space utilization for a university.

First the average income per person (i.e. per student) must be calculated. Where each student pays a fee, this may be the total fee income divided by the number of students. Where there are other sources of income such as grants, then the total teaching income may be used. Any elements that are supported by separate income streams — e.g. in a university, research, residential accommodation and commercial initiatives — are all subject to separate financial planning and may be excluded from the present analysis. To allow for part-time students, the number of full-time equivalent (FTE) students is used:

$$average\ income\ per\ student = \frac{teaching\ income}{number\ of\ FTE\ students} = \frac{£41,140,000}{8,124} = £5,052 \qquad (1)$$

Next we must determine the proportion of this average income per student that is available for property costs, here called the property income per student. One way of estimating this figure is to compare the annual property costs of the university with the total annual expenditure. In this case the total annual expenditure is £79.4 million and the total annual property costs are £9.32 million, or (to the nearest hole number) 12% of total expenditure. Therefore it is reasonable to assume that 12% of the average student income is available for property costs, i.e. 12% × £5,052, giving a property income per student of £606.

If more detailed figures are available, such as the total expenditure and the property costs associated with teaching accommodation, these may be used instead to obtain an alternative estimate of the property income per student.

Now that we have a property income per student, it is necessary to compare this with the average cost of a workplace in order to calculate the target space utilization. The average cost per workplace is determined from the following formula:

$$average\ workplace\ costs = average\ workplace\ area \times \frac{total\ working\ area\ costs}{total\ working\ area} \qquad (2)$$

This particular survey was limited to a particular subset of the teaching accommodation at the university with a total area of 13,001 square metres and considered by the university to contain 7,384 workplaces. Thus the average area per student workplace is 1.76 m$^2$.

The total annual property costs of the university are £9.32 million, of which £3.48 million are spent on teaching accommodation (including associated offices). This figure represents the total working area costs in formula (2). The total working area of the teaching space (excluding associated offices) is 27,578 m$^2$. This figure represents the total working area in formula (2). Thus the property costs of the teaching accommodation per square metre of teaching area are £126 per square metre. Putting all the figures into formula (2):

$$average\ workplace\ costs = 1,76 \times \frac{£3,480,000}{27,578} = £222\ per\ year$$

The offices are not revenue-generating space (they do not contain any student workplaces) so they represent an overhead that must be paid for from the teaching income. For this reason, the offices are included in the costs figure but excluded from the working area figure.

Because this survey was related to a subset of the teaching accommodation, values for just that subset were used to derive the average workplace area, while values for the total teaching accommodation were used to derive the average cost per workplace. In many cases the same area will apply to both parts of the formula and formula (2) can then be simplified to:

$$average\ cost\ per\ workplace = \frac{total\ working\ area\ costs}{number\ of\ workplaces} \qquad (3)$$

Now that we know the average cost per workplace and the average income per student, one value can be divided by the other to derive a target number of workplaces per student or, inversely, a target space utilization:

$$target\ space\ utilization = \frac{average\ cost\ per\ workplace}{average\ income\ per\ student} \qquad (4)$$

In this example,

$$target\ space\ utilization = \frac{£222}{£606} = 37\ \%$$

This target space utilization of 37 % (to the nearest whole number) indicates the average proportion of available workplace hours that must be occupied by students if the fee income from students is to cover the cost of their teaching accommodation. The figure can be compared with the actual space utilization figure derived from a space utilization survey for a sample period of time.. University timetable data may be used if it represents an accurate and complete record of used workplace hours. Any failure to meet the target figure means that the cost of teaching accommodation is being subsidised from other sources, perhaps by being diverted from funds for equipment or staff salaries or research. The actual space utilization can then be improved by changing the design of study programmes, timetabling strategies or the sizes of teaching groups. The target space utilization figure can be an important input to the software that models space requirements and evaluates possible property developments.

Alternatively, any of the factors contributing to the target space utilization can be changed and the method according to the invention can be used as a model to predict the effect of that change on the target space utilization. For example, the number of workplaces may be increased by reducing workplace areas; the total number of students may be increased or decreased; or the property costs may be changed, for example by using more efficient heating. The working area may also be changed by re-dividing or re-allocating existing buildings, by purchasing new buildings or disposing of existing ones. The invention is particularly useful in defining for architects designing new buildings the numbers and types of workplaces and teaching areas required for teaching and learning activities and programmes.

The analysis so far has not taken into account the working hours, i.e. the number of hours during which the property is occupied. To a first approximation, shortening the working week has the same effect as decreasing the number of workplaces by the same ratio. In the example given above, reducing the working week from 40 hours to 30 hours would have the same effect as reducing the number of workplaces by a factor of 3/4 to 6,093. The target space utilization would then rise by a factor of 4/3 to 49 %. In practice, the shorter working week may also have an effect on costs such as heating and lighting, and the formula can also take these changes into account.

Similar reasoning can be used to convert the actual space utilization to an effective cost per workplace, using the following formula:

method of assessing an effective cost per workplace in a property, comprising:

determining an actual space utilization in the property;
determining an average cost per workplace; and
calculating the effective cost per workplace using the following formula:

$$iffective\ cost\ per\ workplace = \frac{average\ cost\ per\ workplace}{actual\ space\ utilization} \tag{5}$$

The actual space utilization is determined from a sample survey or timetabling data in a conventional manner, as previously explained. The average cost per workplace is derived from formula (2). Returning to the same university as the previous example, the actual occupancy rate was found to be 15 %. Using the same value of average cost per workplace, £222, gives an effective cost per workplace of £1480. This can be compared with the average income per student of £606 to see that each workplace is effectively subsidized by £874 per year. Conversion of the space utilization figure to a monetary value in this way helps the university authorities to understand the significance of effective space utilization. The fact that the figures are derived from the university's own estate management accounts makes them easier to accept than an arbitrary figure imposed by government.

In the aforementioned figures, the average cost per workplace of £222 is to the effective cost per workplace at 100% space utilization. The average income per student of £606 equates to the effective cost per workplace at the target space utilization of 36%. The figure of £1480 is the effective cost per workplace at the actual space utilization of only 15%. It can be seen that the effective cost per workplace varies inversely with the actual space utilization.

The Figure illustrates this inverse relationship more clearly in an example where the average cost per workplace is £450 per year. A target space utilization in the range 25 - 35 % is shown by way of example. It can be seen that below this range, small decreases in space utilization have a dramatic increase in the effective cost per workplace, while above the range the savings from improved space utilization become more modest.

**Claims**

1. A method of assessing a target space utilization of a property, comprising:

   determining a property income per person;
   determining an average cost per workplace; and
   calculating the target space utilization using the following formula:

$$target\ space\ utilization = \frac{average\ cost\ per\ workplace}{property\ income\ per\ person}$$

2. A method according to claim 1, wherein the property income per person is determined using the following formula:

$$property\ income\ per\ person = \frac{total\ income}{number\ of\ persons} \times \frac{property\ costs}{total\ costs},$$

3. A method according to claim 2, wherein the number of persons is an equivalent number of full-time persons.

4. A method according to any of claims 1 to 3, wherein the average cost per workplace is determined using the following formula:

$$average\ workplace\ costs = average\ workplace\ area \times \frac{total\ working\ area\ costs}{total\ working\ area}$$

5. A method according to any of claims 1 to 3, wherein the average cost per workplace is determined using the following formula:

$$average\ workplace\ costs = \frac{total\ working\ area\ costs}{number\ of\ workplaces}$$

6. A method of assessing an effective cost per workplace in a property, comprising:

   determining an actual space utilization in the property;
   determining an average cost per workplace; and
   calculating the effective cost per workplace using the following formula:

$$effective\ cost\ per\ workplace = \frac{average\ cost\ per\ workplace}{actual\ space\ utilization}$$

7. A method according to claim 6, wherein the average cost per workplace is determined using the following formula:

$$average\ workplace\ costs = average\ workplace\ area \times \frac{total\ working\ area\ costs}{total\ working\ area}$$

8. A method according to any preceding claim, wherein the property is an educational establishment, the persons are students and the working areas are teaching areas.

9. A method of assessing a target space utilization of a property, substantially as described herein.

10. A method of assessing an effective cost per workplace in a property, substantially as described herein.

11. A computer program for carrying out a method according to any of claims 1 to 10.

12. A computer loaded with software for carrying out a method according to any of claims 1 to 10.

## DECLARATION

**European Patent Office**

which under Rule 45 of the European Patent Convention shall·be considered, for the purposes of subsequent proceedings; as the European search report

**Application Number**

EP 02 07 8347

| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |
|---|---|

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful

search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

| Place of search | Date | Examiner |
|---|---|---|
| MUNICH | 11 November 2002 | Aupiais, B |

EPO FORM 1504 (P04C37)